(19) Europäisches Patentamt
European Patent Office
Office européen des brevets

(11) **EP 3 972 188 A1**

(12) **EUROPEAN PATENT APPLICATION**

(43) Date of publication:
**23.03.2022 Bulletin 2022/12**

(21) Application number: **21189323.5**

(22) Date of filing: **03.08.2021**

(51) International Patent Classification (IPC):
**H04L 9/00** $^{(2022.01)}$   **G06F 7/00** $^{(2006.01)}$

(52) Cooperative Patent Classification (CPC):
**H04L 9/008; H04L 2209/125**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.09.2020 US 202017025344**

(71) Applicant: **INTEL Corporation
Santa Clara, CA 95054 (US)**

(72) Inventors:
• **SASTRY, Manoj
Portland, 97229 (US)**

• **GHOSH, Santosh
Hillsboro, 97124 (US)**
• **REINDERS, Andrew
Portland, 97205 (US)**
• **MISOCZKI, Rafael
Hillsboro, 97124 (US)**
• **CAMMAROTA, Rosario
Santa Clara, 95054 (US)**

(74) Representative: **Viering, Jentschura & Partner mbB
Patent- und Rechtsanwälte
Am Brauhaus 8
01099 Dresden (DE)**

(54) **LOW CIRCUIT DEPTH HOMOMORPHIC ENCRYPTION EVALUATION**

(57)    Embodiments are directed to low circuit depth homomorphic encryption evaluations. An embodiment of an apparatus includes a hardware accelerator to receive a ciphertext generated by homomorphic encryption (HE) for evaluation, determine two coefficients of the ciphertext for HE evaluation, input the two coefficients as a first operand and a second operand to a pipeline multiplier for low circuit depth HE evaluation, perform combinatorial multiplication between the first operand and portions of the second operand, accumulate results of the combinatorial multiplication at each stage of the pipeline multiplier, and perform reduction with Mersenne prime modulus on a resulting accumulated output of the combinatorial multipliers of the pipeline multiplier.

FIG. 1

EP 3 972 188 A1

**Description**

Embodiments described herein generally relate to the field of computing systems and, more particularly, low circuit depth homomorphic encryption evaluation.

Cryptographic computing may refer to solutions for computer system security that employ cryptographic mechanisms inside processor components. Some cryptographic computing systems may employ encryption and/or other cryptographic mechanisms inside a processor core on memory pointers or user data before such data leaves the processor boundary and enters some external memory unit or is communicated to some other device. One type of cryptographic computing is homomorphic encryption (HE). HE refers to a class of public encryption key encryption schemes that performs evaluation (e.g., addition and multiplication) on homomorphically-encrypted data.

Embodiments described here are illustrated by way of example, and not by way of limitation, in the figures of the accompanying drawings in which like reference numerals refer to similar elements.

FIG. 1 illustrates a computing device employing a homomorphic encryption (HE) low circuit depth (LCD) pipeline evaluation component, according to implementations of the disclosure.

FIG. 2 illustrates HE LCD pipeline evaluation component, according to one implementation of the disclosure.

FIG. 3 is a block diagram depicting an example architectural diagram of an HE LCD pipeline evaluation component in accordance with implementations of the disclosure.

FIG. 4 is a block diagram depicting an example architectural diagram of an HE LCD pipeline evaluation component in accordance with implementations of the disclosure.

FIG. 5 illustrates an example flow for low circuit depth homomorphic encryption evaluations, in accordance with certain implementations of the disclosure.

FIG. 6 is a schematic diagram of an illustrative electronic computing device to enable low circuit depth homomorphic encryption evaluations, according to some implementations of the disclosure.

Various embodiments are directed to techniques for low circuit depth homomorphic encryption evaluation, for instance.

Homomorphic encryption (HE) refers to a form of encryption that allows computation on ciphertexts, generating an encrypted result which, when decrypted, matches the result of the operations as if they had been performed on the plaintext. HE identifies a class of public key encryption schemes that performs evaluation (e.g., addition and multiplication) on homomorphically-encrypted data. In modern HE schemes, ciphertexts can be organized as an algebraic ring with high dimensionality and large coefficients. For example, ring learning with errors (LWE) is a typical choice of an algebraic ring, in which a multiplication of two ciphertexts utilizes multiplying high-degree polynomials (e.g., of degree 8192), with coefficients modulo ("mod" or "modulus") a large integer (e.g., 220-bit).

Example application domains for HE include healthcare, finance and, in general, fields that benefit from the combined analysis of data contributed by multiple parties. Examples of workloads for HE applications include, but are not limited to, Logistic Regression Training, Bayesian Inference, or Neural Network. Some applications for HE domain can be considered "low circuit depth" applications. Low circuit depth applications refer to those applications that utilize a small number (e.g., 1 or 2 nested multiplications) of operations on the ciphertext in order to generate a result. Some examples of low circuit depth applications may include matrix multiplication, linear regression, where multiplicative depth is 1. Another low circuit depth application may be an HE-friendly version of logistic regression with multiplicative depth less than 5, for example.

One drawback of current HE applications is that evaluating a multiplication on homomorphically-encrypted data can be $10^5$ times slower compared to evaluating the same operation on plaintext. For example, as noted above, in HE schemes, ciphertexts can be organized as an algebraic ring with high dimensionality and large coefficients. As such, a result of the HE scheme is that a single native data type (e.g., integer, floating point, etc.) is encrypted into a more complex data structure. This more complex data structure can be a polynomial with coefficients of a certain bit width.

As a result, performing equivalent computational operations, such as addition and multiplication, in a native plaintext domain versus the HE domain, is also more complex. For example, performing multiplication of two 8-bit integers in the native domain results in a 16-bit output. However, the equivalent multiplication of the two 8-bit integers once encrypted in the HE domain can involve a few thousand element polynomials of coefficients that are a few hundred bits as input. This can involve more than one hundred thousand multiplications in the HE domain. As such, latency and throughout of coefficient multiplications in the HE domain are directly correlated to the overall performance of an HE evaluation.

Embodiments of the disclosure address the above-noted challenges of computational complexity in the HE domain for low circuit depth applications by providing low circuit depth homomorphic encryption evaluation. In implementations of the disclosure, an unrolled (not iterative) pipelined multiplier for evaluations of coefficients of HE ciphertext is provided that utilizes a Mersenne prime structure for computing a reduction in the pipelined multiplier.

The utilization of the pipelined multiplier for low circuit depth applications in the HE domain as described herein improves performance of computing complex operations on encrypted data for neural networks and training machine learning tasks including linear and logistic regression. As such, implementations of the disclosure improve overall computing device performance including processing unit utilization and improved latency in the computing architecture.

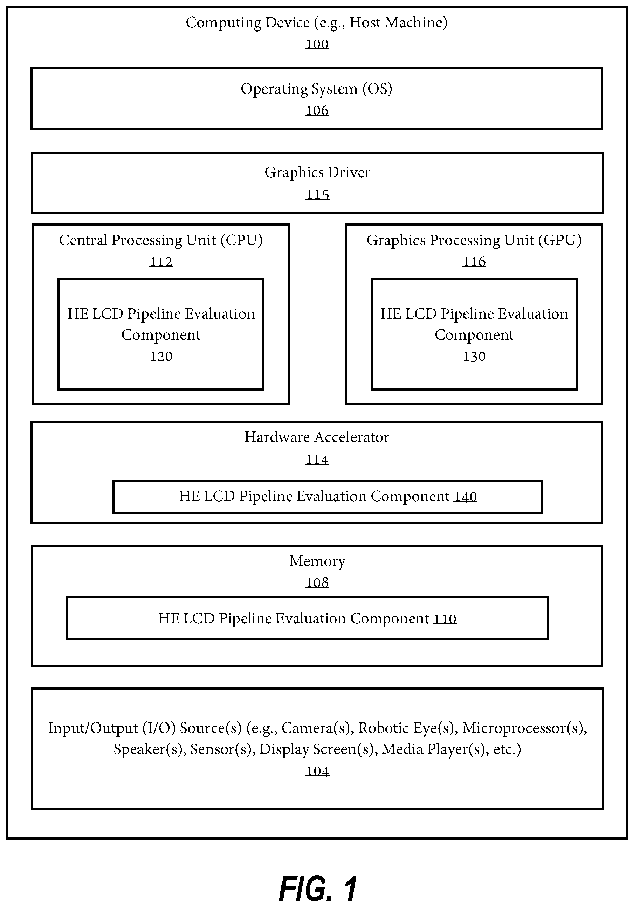

FIG. 1 illustrates a computing device 100 employing an HE low circuit depth (LCD) pipeline evaluation component 110 according to one implementation of the disclosure. Computing device 100 represents a communication and data processing device including or representing (without limitations) smart voice command devices, intelligent personal assistants, home / office automation system, home appliances (e.g., washing machines, television sets, etc.), mobile devices (e.g., smartphones, tablet computers, etc.), gaming devices, handheld devices, wearable devices (e.g., smartwatches, smart bracelets, etc.), virtual reality (VR) devices, head - mounted display (HMDs), Internet of Things (IoT) devices, laptop computers, desktop computers, server computers, set - top boxes (e.g., Internet based cable television set - top boxes, etc.), global positioning system (GPS) - based devices, automotive infotainment devices, etc.

In some embodiments, computing device 100 includes or works with or is embedded in or facilitates any number and type of other smart devices , such as (without limitation) autonomous machines or artificially intelligent agents , such as a mechanical agents or machines , electronics agents or machines , virtual agents or machines , electromechanical agents or machines , etc. Examples of autonomous machines or artificially intelligent agents may include (without limitation) robots, autonomous vehicles (e.g., self-driving cars, self - flying planes, self - sailing boats, etc.), autonomous equipment self - operating construction vehicles, self - operating medical equipment, etc.) , and / or the like. Further, "autonomous vehicles" are not limed to automobiles but that they may include any number and type of autonomous machines, such as robots, autonomous equipment, household autonomous devices, and / or the like, and any one or more tasks or operations relating to such autonomous machines may be interchangeably referenced with autonomous driving.

Further, for example, computing device 100 may include a computer platform hosting an integrated circuit ("IC"), such as a system on a chip ("SOC" or "SOC") , integrating various hardware and / or software components of computing device 100 on a single chip.

As illustrated, in one embodiment, computing device 100 may include any number and type of hardware and / or software components, such as (without limitation) graphics processing unit ("GPU" or simply "graphics processor") 114, graphics driver (also referred to as "GPU driver", "graphics driver logic", "driver logic", user - mode driver (UMD), user - mode driver framework (UMDF), or simply "driver ") 115, central processing unit ("CPU" or simply "application processor") 112, memory 108, network devices, drivers, or the like, as well as input/output (1/0) sources 104, such as touchscreens, touch panels, touch pads, virtual or regular keyboards, virtual or regular mice, ports, connectors, etc. Computing device 100 may include operating system (OS) 106 serving as an interface between hardware and / or physical resources of the computing device 100 and a user.

It is to be appreciated that a lesser or more equipped system than the example described above may be utilized for certain implementations. Therefore, the configuration of computing device 100 may vary from implementation to implementation depending upon numerous factors, such as price constraints, performance requirements, technological improvements, or other circumstances.

Embodiments may be implemented as any or a combination of: one or more microchips or integrated circuits interconnected using a parent board, hardwired logic, software stored by a memory device and executed by a microprocessor, firmware, an application specific integrated circuit (ASIC), and / or a field programmable gate array (FPGA). The terms "logic", "module", "component", "engine", "circuitry", "element", and "mechanism" may include, by way of example, software, hardware and / or a combination thereof, such as firmware.

In one embodiment, as illustrated, HE LCD pipeline evaluation component 110 may be hosted by memory 108 in communication with I/O source(s) 104, such as microphones, speakers, etc., of computing device 100. In another embodiment, HE LCD pipeline evaluation component 110 may be part of or hosted by operating system 106. In yet another embodiment, HE LCD pipeline evaluation component 110 may be hosted or facilitated by graphics driver 115. In yet another embodiment, HE LCD pipeline evaluation component 110 may be hosted by or part of a hardware accelerator 114; for example, HE LCD pipeline evaluation component 110 may be embedded in or implemented as part of the processing hardware of hardware accelerator 114, such as in the form of HE LCD pipeline evaluation component 140. In yet another embodiment, HE LCD pipeline evaluation component 110 may be hosted by or part of graphics processing unit ("GPU" or simply graphics processor") 116 or firmware of graphics processor 116; for example HE LCD pipeline multiplication component may be embedded in or implemented as part of the processing hardware of graphics processor 116, such as in the form of HE LCD pipeline evaluation component 130. Similarly, in yet another embodiment, HE LCD pipeline evaluation component 110 may be hosted by or part of central processing unit ("CPU" or simply "application processor") 112; for example, HE LCD pipeline evaluation component 120 may be embedded in or implemented as part of the processing hardware of application processor 112, such as in the form of HE LCD pipeline evaluation component 120. In some embodiments, HE LCD pipeline evaluation component 110 may be provided by one or more processors including one or more of a graphics processor, an application processor, and another processor, wherein the one or more processors are co-located on a common semiconductor package.

It is contemplated that embodiments are not limited to certain implementation or hosting of HE LCD pipeline evaluation component 110 and that one or more portions or components of HE LCD pipeline evaluation component 110 may be employed or implemented as hardware, software, or any combination thereof, such as firmware. In one embodiment, for example, the HE LCD pipeline evaluation component may be hosted by a machine learning processing unit which is different from the GPU. In another embodiment, the HE LCD pipeline evaluation component may be distributed between a machine learning processing unit and a CPU. In another embodiment, the HE LCD pipeline evaluation component may be distributed between a machine learning processing unit, a CPU and a GPU. In another embodiment, the HE LCD pipeline evaluation component may be distributed between a machine learning processing unit, a CPU, a GPU, and a hardware accelerator.

Computing device 100 may host network interface device(s) to provide access to a network, such as a LAN, a wide area network (WAN), a metropolitan area network (MAN), a personal area network (PAN) , Bluetooth , a cloud network, a mobile network (e.g., 3rd Generation (3G), 4th Generation (4G), etc.), an intranet, the Internet, etc. Network interface(s) may include, for example, a wireless network interface having antenna, which may represent one or more antenna(s). Network interface(s) may also include, for example, a wired network interface to communicate with remote devices via network cable, which may be, for example, an Ethernet cable, a coaxial cable, a fiber optic cable, a serial cable, or a parallel cable.

Embodiments may be provided, for example, as a computer program product which may include one or more machine - readable media having stored thereon machine executable instructions that, when executed by one or more machines such as a computer, network of computers, or other electronic devices, may result in the one or more machines carrying out operations in accordance with embodiments described herein. A machine - readable medium may include, but is not limited to, floppy diskettes , optical disks, CD - ROMs (Compact Disc - Read Only Memories), and magneto - optical disks, ROMs, RAMS, EPROMs (Erasable Programmable Read Only Memories), EEPROMs (Electrically Erasable Programmable Read Only Memories) , magnetic or optical cards, flash memory, or other type of media / machine - readable medium suitable for storing machine - executable instructions.

Moreover, embodiments may be downloaded as a computer program product, wherein the program may be transferred from a remote computer (e.g., a server) to a requesting computer (e.g., a client) by way of one or more data signals embodied in and / or modulated by a carrier wave or other propagation medium via a communication link (e.g., a modem and / or network connection).

Throughout the document, term "user" may be interchangeably referred to as "viewer", "observer", "speaker", "person", "individual", "end - user", and / or the like. It is to be noted that throughout this document, terms like "graphics domain" may be referenced interchangeably with "graphics processing unit", "graphics processor", or simply "GPU" and similarly, "CPU domain" or "host domain" may be referenced interchangeably with "computer processing unit", "application processor", or simply "CPU".

It is to be noted that terms like "node", "computing node", "server", "server device", "cloud computer", "cloud server", "cloud server computer", "machine", "host machine", "device", "computing device", "computer", "computing system", and the like, may be used interchangeably throughout this document. It is to be further noted that terms like "application", "software application", "program", "software program", "package", "software package", and the like, may be used interchangeably throughout this document. Also, terms like "job", "input", "request", "message ", and the like, may be used interchangeably throughout this document.

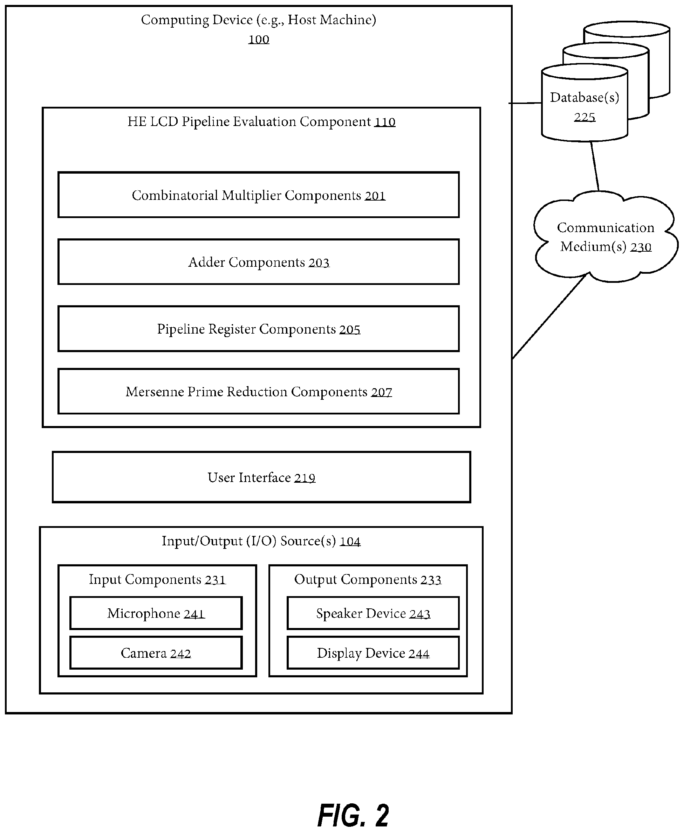

**FIG. 2** illustrates HE LCD pipeline evaluation component 110 of FIG. 1, according to one implementation of the disclosure. For brevity, many of the details already discussed with reference to FIG. 1 are not repeated or discussed hereafter. In one embodiment, HE LCD pipeline evaluation component 110 may be the same as any of HE LCD pipeline evaluation components 110, 120, 130, 140 described with respect to FIG. 1 and may include any number and type of components, such as (without limitations): combinatorial multiplier components 201; adder components 203; pipeline register components 205; and Mersenne prime reduction components 207.

Computing device 100 is further shown to include user interface 219 (e.g., graphical user interface (GUI) based user interface, Web browser, cloud-based platform user interface, software application-based user interface, other user or application programming interfaces (APIs), etc.). Computing device 100 may further include I/O source(s) 104 having input component (s) 231, such as camera(s) 242 (e.g., Intel® RealSenseTM camera), sensors, microphone(s) 241, etc., and output component(s) 233, such as display device(s) or simply display(s) 244 (e.g., integral displays, tensor displays, projection screens, display screens, etc.), speaker devices(s) or simply speaker(s), etc.

Computing device 100 is further illustrated as having access to and/or being in communication with one or more database(s) 225 and/or one or more of other computing devices over one or more communication medium(s) 230 (e.g., networks such as a proximity network, a cloud network, the Internet, etc.).

In some embodiments, database(s) 225 may include one or more of storage mediums or devices, repositories, data sources, etc., having any amount and type of information, such as data, metadata, etc., relating to any number and type of applications, such as data and/or metadata relating to one or more users, physical locations or areas, applicable laws, policies and/or regulations, user preferences and/or profiles, security and/or authentication data, historical and/or other details, and/or the like.

As aforementioned, computing device 100 may host I/O sources 104 including input component(s) 231 and output component(s) 233. In one embodiment, input component(s) 231 may include a sensor array including, but not limited to, microphone(s) 241 (e.g., ultrasound microphones), camera(s) 242 (e.g., two-dimensional (2D) cameras, three - dimensional (3D) cameras, infrared (IR) cameras, depth-sensing cameras, etc.), capacitors, radio components, radar components, scanners, and/or accelerometers, etc. Similarly, output component(s) 233 may include any number and type of display device(s) 244, projectors, light - emitting diodes (LEDs), speaker(s) 243, and / or vibration motors, etc.

As aforementioned, terms like "logic", "module", "component", "engine", "circuitry", "element", and "mechanism" may include, by way of example, software or hardware and / or a combination thereof, such as firmware. For example, logic may itself be or include or be associated with circuitry at one or more devices, such as HE LCD pipeline evaluation component 120, HE LCD pipeline evaluation component 130, and/or HE LCD pipeline evaluation component 140 hosted by application processor 112, graphics processor 116, and/or hardware accelerator 114, respectively, of FIG. 1 having to facilitate or execute the corresponding logic to perform certain tasks.

For example, as illustrated, input component (s) 231 may include any number and type of microphone(s) 241, such as multiple microphones or a microphone array, such as ultrasound microphones, dynamic microphones, fiber optic microphones, laser microphones, etc. It is contemplated that one or more of microphone(s) 241 serve as one or more input devices for accepting or receiving audio inputs ( such as human voice ) into computing device 100 and converting this audio or sound into electrical signals . Similarly, it is contemplated that one or more of camera(s) 242 serve as one or more input devices for detecting and capturing of image and / or videos of scenes, objects, etc., and provide the captured data as video inputs into computing device 100.

As previously described, conventional HE architectures for machine learning and deep learning solutions are associated with computational complexity and latency issues. Embodiments provide for a novel technique for low circuit depth homomorphic encryption evaluation. This novel technique is used to address the above-noted complexity and/or performance issues in computing architectures seeking to implement HE. Implementations of the disclosure utilize an HE LCD pipeline evaluation component 110 to provide an unrolled (not iterative) pipelined multiplier for evaluations of coefficients of HE ciphertext, where the pipelined multiplier utilizes a Mersenne prime structure for computing a reduction in the pipelined multiplier.

With respect to FIG. 2, the HE LCD pipeline evaluation component 110 includes combinatorial multiplier components 201, adder components 203, pipeline register components 205, and Mersenne prime reduction components 207 to perform the LCD HE evaluations of the HE LCD pipeline evaluation component 110. In implementations of the disclosure, the operations of units 201, 203, 205, 207 of HE LCD pipeline evaluation component 110 are based on modular arithmetic and Mersenne structures. A Mersenne prime refers to a prime number that is one less than a power of two. That is, it is a prime number of the form $M_n = 2^n - 1$ for some integer n. For example, HE LCD pipeline evaluation component 110 may be based on a Mersenne prime structure or a Generalized Mersenne prime structure, where Modulus

$$q_i = 2^k + \sum_{t=1}^{up\ to\ 4} \pm 2^x, 1 \le i \le j, 0 \le x \le k\text{-}1.$$

q = $2^m - 1$ or Modulus Such moduli can avoid expensive division by q. In addition, the proposed mod q multiplication does not incorporate any addition error in Fully HE (FHE) ciphertexts during their evaluation versus known latency optimization techniques of approximation in division with errors.

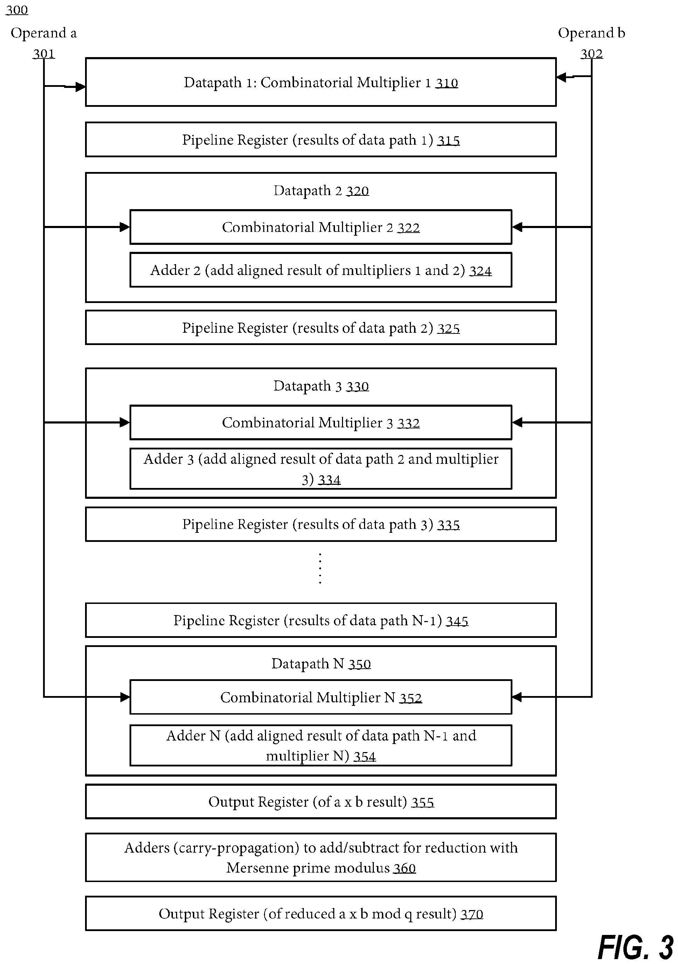

Further details of the combinatorial multiplier components 201, adder components 203, pipeline register components 205, and Mersenne prime reduction components 207 are described below with respect to FIGS. 3-4.

In one implementation, the HE LCD pipeline evaluation component 110 implements an unrolled (not-iterative) pipelined multiplier for coefficients that exploits the Mersenne structure. The unrolled pipelined multiplier may include, but is not limited to, combinatorial multipliers components 201, adder components 203, pipeline register components 205, and Mersenne prime reduction components 207. For example, in one implementation, the HE LCD pipeline evaluation component 110 may perform multiplication of 224 bit x 224 bit coefficients of HE ciphertext. In the example, each pipeline stage of HE LCD pipeline evaluation component 110 includes a combinatorial datapath of 224-bit (a) and 32-bit (part of b). In the example, the HE LCD pipeline evaluation component 110 may include seven pipeline stages where the entire 224 x 224 multiplication is computed using combinatorial multiplier components 201, adder components 203, pipeline register components 205. The HE LCD pipeline evaluation component 110 may further include a small addition datapath at a final pipeline stage for reducing 448-bit multiplication results to 224-bit using a Mersenne prime structure or a Generalized Mersenne prime structure.

Combinatorial multipliers components 201, adder components 203, pipeline register components 205, and Mersenne prime reduction components 207are described below with respect to FIGS. 3-4.

FIG. 3 is a block diagram depicting an example architectural diagram of an HE LCD pipeline evaluation component 300 in accordance with implementations of the disclosure. In one implementation, the HE LCD pipeline evaluation component 300 may be the same as HE LCD pipeline evaluation component 110 described with respect to FIGS. 1 and 2.

In one implementation, the HE LCD pipeline evaluation component 300 includes 'N' stages of datapaths 310, 320, 330, 350 having combinatorial multipliers 310, 322, 332, 352 and adders 324, 334, 354; pipeline registers 315, 325, 335, 345, 355, 370; and a final pipeline stage for reducing, using an adder 360, a result of the multiplications results using a Mersenne structure. More or less components than those illustrated with respect to FIG. 3 may be implemented in implementations of the disclosure.

The HE LCD pipeline evaluation component 300 can receive as operands a 301 and b 302 coefficients of an HE ciphertext. In one implementations, operand a 301 is provided in its complete size to each datapath 310, 320, 330, 350 of the HE LCD pipeline evaluation component 300, while operand b 302 is broken in portions or "chunks" (e.g., of equal size and in order from least significant bit to most significant bit) and provided to each datapath 310, 320, 330, 350. The multiplication by HE LCD pipeline evaluation component 300 is performed in a pipeline fashion (or pipeline manner) so that in every clock can have 2 different operands a 301 and b 302 that can start evaluations on.

Each datapath 310, 320, 330, 350 may include a combinatorial multiplier 310, 322, 332, 352 to perform multiplication on the input operands 301, 302. Each datapath 320, 330, 350 after the first data path 1 310 can also include an adder circuit 324, 334, 354 that accumulates the aligned results of the combinatorial multipliers 322, 332, 352 of the respective datapaths 320, 330, 350 with the results of the immediate previous datapath multiplier 310, 322, 332, 352. The accumulated results of each datapath 310, 320, 330, 350 are passed to a pipeline register 315, 325, 335, 345 for storage to enable access by subsequent datapaths.

An output register 355 stores the final accumulated results of the combinatorial multipliers that is output from the final datapath N 350. The result stored in output register 355 is twice the size of the each of the operands a 301 and b 302. As such, the HE LCD pipeline evaluation component 300 includes an adder (Carry-propagation) 360 to add/subtract for reduction with Mersenne prime modulus. As noted above, in implementations of the disclosure, the Mersenne prime modulus is either a Mersenne prime or a generalized Mersenne prime. The utilization of a Mersenne prime or generalized Mersenne prime allows for a reduction in pipeline stage size of 2 or 3 times to complete the reduction of the multiplication result stored at output register 355.

In one implementation, determining which of the Mersenne prime or generalized Mersenne prime structure to implement at adder 360 may be based on the bit length target. If it is determined that 2m -1 is a prime, then a Mersenne prime may be utilized as a first choice. However, if 2m-1 is not a prime, then the generalized Mersenne prime may be utilized. In some cases, utilization of a generalized Mersenne prime may add approximately 5 add/subtract operations, which may add another 1 or 2 stages to the pipeline structure of HE LCD pipeline evaluation component 300 (as compared to the Mersenne prime implementation of HE LCD pipeline evaluation component 300).

The result of the reduction using the Mersenne structure as performed by adder 360 is then stored in an output register 370 as a reduced operand a 301 x operand b 302 mod q result.

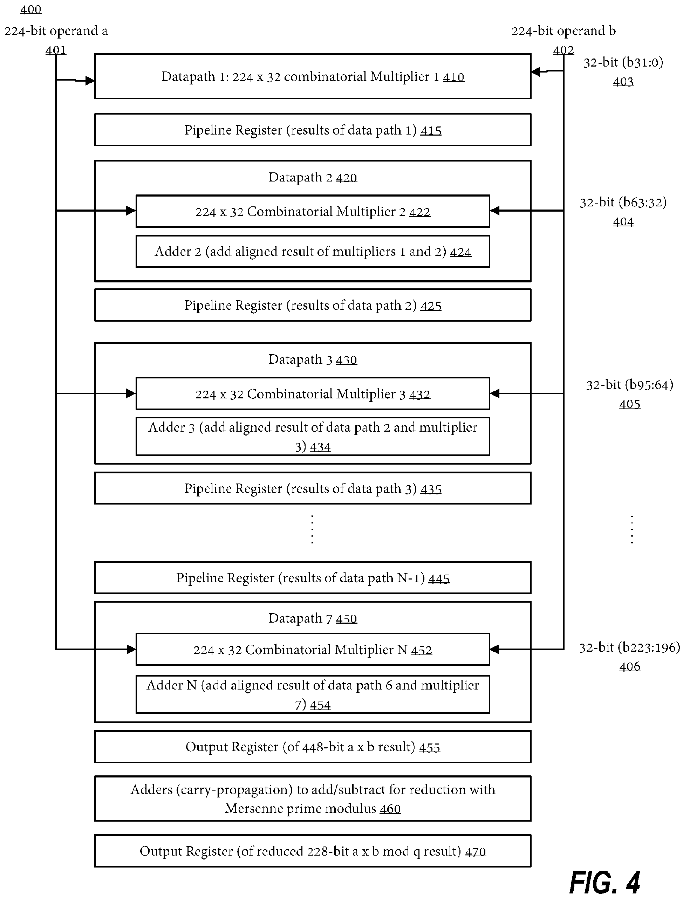

**FIG. 4** is a block diagram depicting an example architectural diagram of an HE LCD pipeline evaluation component 400 in accordance with implementations of the disclosure. In one implementation, the HE LCD pipeline evaluation component 400 may be the same as HE LCD pipeline evaluation component 110 described with respect to FIGS. 1 and 2 or the same as HE LCD pipeline evaluation component 300 described with respect to FIG. 3.

In one implementation, the HE LCD pipeline evaluation component 400 depicts a multiplication evaluation performed on two 224-bit operands: 224-bit operand a 401 and 224-bit operand b 402. In one implementation, the HE LCD pipeline evaluation component 400 includes '7' stages of datapaths: datapath 1 410, datapath 2 420, datapath 3 430 through datapath 7 450 each having 224 × 32 combinatorial multipliers 410, 422, 432 through 452 and adders 424, 434, through 454; pipeline registers 415, 425, 435, 445, 455, 470; and a final pipeline stage for reducing, using an adder 460, a result of the multiplications results using a Mersenne structure. More or less components than those illustrated with respect to FIG. 4 may be implemented in implementations of the disclosure.

The HE LCD pipeline evaluation component 400 can receive as operands a 401 and b 402 coefficients of an HE ciphertext. The multiplication by HE LCD pipeline evaluation component 400 is performed in a pipeline fashion so that in every clock can have 2 different operands a 401 and b 402 that can start evaluations on. In one implementations, 224-bit operand a 401 is provided in its complete size (i.e., full 224 bits) to each datapath 410, 420, 430, 450 of the HE LCD pipeline evaluation component 400. Operand b 402 is broken into 7 32-bit portions or "chunks" and sequentially provided to each datapath 410, 420, 430, 450 from least significant bits to most significant bits. As shown in FIG. 4, bits 31:0 403 of operand b 402 are provided to datapath 1 410, bits 63:32 404 of operand b 402 are provided to datapath 2 402, bits 95:64 405 of operand b 402 are provided to datapath 3 430, and so on until bits 223:196 406 of operand b 402 are provided to datapath 7 450.

Each datapath 410, 420, 430, 450 may include a 224 × 32 combinatorial multiplier 410, 422, 432, 452 to perform multiplication on the input operands 401, 402 (as provided in portions 403-406). Each datapath 2-7 420, 430, 450 subsequent the datapath 1 410 can also include an adder circuit 424, 434, 454 that accumulates the aligned results of the combinatorial multipliers 422, 432, 452 of the respective datapaths 2-7 420, 430, 450 with the results of the immediate previous datapath multiplier 410, 422, 432, 452. The accumulated results of each datapath 1-7 410, 420, 430, 450 are iteratively passed to pipeline registers 415, 425, 435, 445 for storage to enable access by subsequent datapaths 420, 430 ,450.

An output register 455 stores the final accumulated results of the combinatorial multipliers that is output from the final datapath 7 450. The result stored in output register 455 is the result of multiplying the 224-bit operand a 401 by the 224-bit operand b 402, which results in a 448-bit a × b. To reduce the 448-bit result to a 224-bit result, the HE LCD pipeline evaluation component 400 includes an adder (carry-propagation) 460 to add/subtract for reduction with Mersenne prime modulus. As noted above, in implementations of the disclosure, the Mersenne prime modulus is either a Mersenne prime or a generalized Mersenne prime. The utilization of a Mersenne prime or generalized Mersenne prime allows for a reduction in pipeline stage size of 2 or 3 times to complete the reduction of the multiplication result stored at output register 455.

In one implementation, determining which of the Mersenne prime or generalized Mersenne prime structure to implement at adder 460 may be based on the bit length target. If it is determined that 2m -1 is a prime, then a Mersenne prime may be utilized as a first choice. However, if 2m-1 is not a prime, then the generalized Mersenne prime may be utilized. In some cases, utilization of a generalized Mersenne prime may add approximately 5 add/subtract operations, which may add another 1 or 2 stages to the pipeline structure of HE LCD pipeline evaluation component 400 (as compared to the Mersenne prime implementation of HE LCD pipeline evaluation component 400).

The result of the reduction using the Mersenne structure as performed by adder 460 is then stored in an output register 470 as a reduced operand a 401 × operand b 402 mod q result.

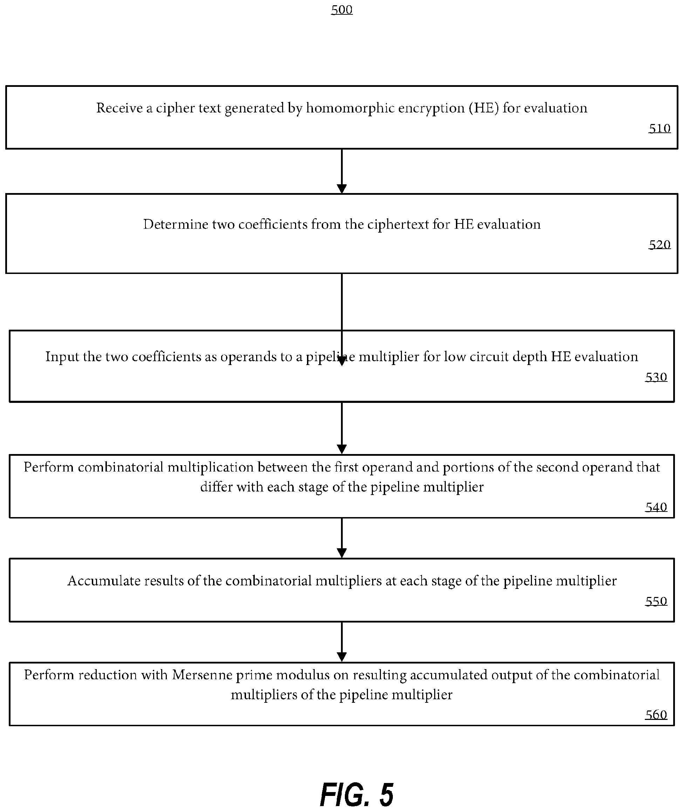

FIG. 5 illustrates an example flow 500 for low circuit depth homomorphic encryption evaluations, in accordance with certain embodiments. The various operations of the flow may be performed by any suitable circuitry, such as a hardware accelerator, a processor or processing unit of a computing device, a controller of a computing device, a controller of a memory module, or other components of a computing device. The example flow 500 may be representative of some or all the operations that may be executed by or implemented on one or more components of computing device 100 of FIGS. 1 and 2, the HE LCD pipeline evaluation component 300 of FIG. 3, and/or the HE LCD pipeline evaluation component 400 of FIG. 4. The embodiments are not limited in this context.

At block 510, the computing device may receive a ciphertext generated by HE for evaluation. At block 520, the computing device may determine two coefficients from the ciphertext for HE evaluation. At block 530, the computing device may input the two coefficients as operands to a pipeline multiplier for low circuit depth HE evaluation. In one implementation, the pipeline multiplier can be the same as HE LCD pipeline evaluation component 300, 400 described with respect to FIGS. 3 and/or 4.

At block 540, the computing device may perform combinatorial multiplication between the first operand and portions of the second operand. In one implementation, the portions of the second operand differ with each stage of the pipeline multiplier. In one implementation, the second operand is broken into equal portions or chunks that are provided from least significant bits to most significant bits to the increasing stages of the pipeline multiplier.

At block 550, the computing device may accumulate results of the combinatorial multipliers at each stage of the pipeline multiplier. In one implementation, pipeline registers are implemented to store results of previous pipeline stages to be accumulated with combinatorial multiplier results of subsequent stages in the pipeline multiplier. Lastly, at block 560, the computing device may perform reduction with Mersenne prime modulus on a resulting accumulated output (i.e., output of the last datapath stage) of the combinatorial multipliers of the pipeline multiplier. In one implementation, the Mersenne prime modulus is either a Mersenne prime or a generalized Mersenne prime.

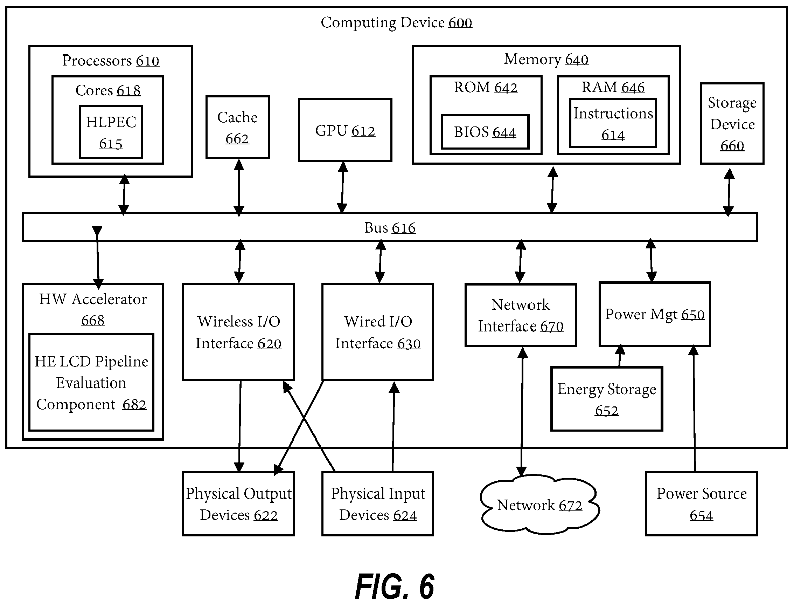

FIG. 6 is a schematic diagram of an illustrative electronic computing device to enable low circuit depth homomorphic encryption evaluations, according to some embodiments. In some embodiments, the computing device 600 includes one or more processors 610 including one or more processors cores 618 including an HE LCD pipeline evaluation component (HLPEC) 615, such as HE LCD pipeline evaluation component 110-140 described with respect to FIGS. 1 and 2, HE LCD pipeline evaluation component 300 described with respect to FIG. 3, or HE LCD pipeline evaluation component 400 described with respect to FIG. 4. In some embodiments, the computing device 600 includes a hardware accelerator 668, the hardware accelerator including an HE LCD pipeline evaluation component 682, such as HE LCD pipeline evaluation component 110-140 described with respect to FIG. 1, HE LCD pipeline evaluation component 300 described with respect to FIG. 3, or HE LCD pipeline evaluation component 400 described with respect to FIG. 4. In some embodiments, the computing device is to provide low circuit depth homomorphic encryption evaluations, as provided in FIGS. 1-5.

The computing device 600 may additionally include one or more of the following: cache 662, a graphical processing unit (GPU) 612 (which may be the hardware accelerator in some implementations), a wireless input/output (I/O) interface 620, a wired I/O interface 630, system memory 640 (e.g., memory circuitry), power management circuitry 650, non-transitory storage device 660, and a network interface 670 for connection to a network 672. The following discussion provides a brief, general description of the components forming the illustrative computing device 600. Example, non-limiting computing devices 600 may include a desktop computing device, blade server device, workstation, or similar device or system.

In embodiments, the processor cores 618 are capable of executing machine-readable instruction sets 614, reading data and/or instruction sets 614 from one or more storage devices 660 and writing data to the one or more storage devices 660. Those skilled in the relevant art will appreciate that the illustrated embodiments as well as other embodiments may be practiced with other processor-based device configurations, including portable electronic or handheld electronic devices, for instance smartphones, portable computers, wearable computers, consumer electronics, personal computers ("PCs"), network PCs, minicomputers, server blades, mainframe computers, and the like.

The processor cores 618 may include any number of hardwired or configurable circuits, some or all of which may include programmable and/or configurable combinations of electronic components, semiconductor devices, and/or logic elements that are disposed partially or wholly in a PC, server, or other computing system capable of executing processor-readable instructions.

The computing device 600 includes a bus or similar communications link 616 that communicably couples and facilitates the exchange of information and/or data between various system components including the processor cores 618, the cache 662, the graphics processor circuitry 612, one or more wireless I/O interfaces 620, one or more wired I/O interfaces 630, one or more storage devices 660, and/or one or more network interfaces 670. The computing device 600 may be referred to in the singular herein, but this is not intended to limit the embodiments to a single computing device 600, since in certain embodiments, there may be more than one computing device 600 that incorporates, includes, or contains any number of communicably coupled, collocated, or remote networked circuits or devices.

The processor cores 618 may include any number, type, or combination of currently available or future developed devices capable of executing machine-readable instruction sets.

The processor cores 618 may include (or be coupled to) but are not limited to any current or future developed single- or multi-core processor or microprocessor, such as: on or more systems on a chip (SOCs); central processing units (CPUs); digital signal processors (DSPs); graphics processing units (GPUs); application-specific integrated circuits (ASICs), programmable logic units, field programmable gate arrays (FPGAs), and the like. Unless described otherwise, the construction and operation of the various blocks shown in FIG. 6 are of conventional design. Consequently, such blocks are not described in further detail herein, as they should be understood by those skilled in the relevant art. The bus 616 that interconnects at least some of the components of the computing device 600 may employ any currently available or future developed serial or parallel bus structures or architectures.

The system memory 640 may include read-only memory ("ROM") 642 and random access memory ("RAM") 646. A portion of the ROM 642 may be used to store or otherwise retain a basic input/output system ("BIOS") 644. The BIOS 644 provides basic functionality to the computing device 600, for example by causing the processor cores 618 to load and/or execute one or more machine-readable instruction sets 614. In embodiments, at least some of the one or more machine-readable instruction sets 614 cause at least a portion of the processor cores 618 to provide, create, produce, transition, and/or function as a dedicated, specific, and particular machine, for example a word processing machine, a digital image acquisition machine, a media playing machine, a gaming system, a communications device, a smartphone, or similar.

The computing device 600 may include at least one wireless input/output (I/O) interface 620. The at least one wireless I/O interface 620 may be communicably coupled to one or more physical output devices 622 (tactile devices, video displays, audio output devices, hardcopy output devices, etc.). The at least one wireless I/O interface 620 may communicably couple to one or more physical input devices 624 (pointing devices, touchscreens, keyboards, tactile devices, etc.). The at least one wireless I/O interface 620 may include any currently available or future developed wireless I/O interface. Example wireless I/O interfaces include, but are not limited to: BLUETOOTH®, near field communication (NFC), and similar.

The computing device 600 may include one or more wired input/output (I/O) interfaces 630. The at least one wired I/O interface 630 may be communicably coupled to one or more physical output devices 622 (tactile devices, video displays, audio output devices, hardcopy output devices, etc.). The at least one wired I/O interface 630 may be communicably coupled to one or more physical input devices 624 (pointing devices, touchscreens, keyboards, tactile devices, etc.). The wired I/O interface 630 may include any currently available or future developed I/O interface. Example wired I/O interfaces include, but are not limited to: universal serial bus (USB), IEEE 1394 ("FireWire"), and similar.

The computing device 600 may include one or more communicably coupled, non-transitory, data storage devices 660. The data storage devices 660 may include one or more hard disk drives (HDDs) and/or one or more solid-state storage devices (SSDs). The one or more data storage devices 660 may include any current or future developed storage appliances, network storage devices, and/or systems. Non-limiting examples of such data storage devices 660 may include, but are not limited to, any current or future developed non-transitory storage appliances or devices, such as one or more magnetic storage devices, one or more optical storage devices, one or more electro-resistive storage devices, one or more molecular storage devices, one or more quantum storage devices, or various combinations thereof. In some implementations, the one or more data storage devices 660 may include one or more removable storage devices, such as one or more flash drives, flash memories, flash storage units, or similar appliances or devices capable of communicable coupling to and decoupling from the computing device 600.

The one or more data storage devices 660 may include interfaces or controllers (not shown) communicatively coupling the respective storage device or system to the bus 616. The one or more data storage devices 660 may store, retain, or otherwise contain machine-readable instruction sets, data structures, program modules, data stores, databases, logical structures, and/or other data useful to the processor cores 618 and/or graphics processor circuitry 612 and/or one or more applications executed on or by the processor cores 618 and/or graphics processor circuitry 612. In some instances, one or more data storage devices 660 may be communicably coupled to the processor cores 618, for example via the bus 616 or via one or more wired communications interfaces 630 (e.g., Universal Serial Bus or USB); one or more wireless communications interfaces 620 (e.g., Bluetooth®, Near Field Communication or NFC); and/or one or more network interfaces 670 (IEEE 802.3 or Ethernet, IEEE 802.11, or Wi-Fi®, etc.).

Processor-readable instruction sets 614 and other programs, applications, logic sets, and/or modules may be stored in whole or in part in the system memory 640. Such instruction sets 614 may be transferred, in whole or in part, from the one or more data storage devices 660. The instruction sets 614 may be loaded, stored, or otherwise retained in system memory 640, in whole or in part, during execution by the processor cores 618 and/or graphics processor circuitry 612.

The computing device 600 may include power management circuitry 650 that controls one or more operational aspects of the energy storage device 652. In embodiments, the energy storage device 652 may include one or more primary (i.e., non-rechargeable) or secondary (i.e., rechargeable) batteries or similar energy storage devices. In embodiments, the energy storage device 652 may include one or more supercapacitors or ultracapacitors. In embodiments, the power management circuitry 650 may alter, adjust, or control the flow of energy from an external power source 654 to the energy storage device 652 and/or to the computing device 600. The power source 654 may include, but is not limited to, a solar power system, a commercial electric grid, a portable generator, an external energy storage device, or any combination thereof.

For convenience, the processor cores 618, the graphics processor circuitry 612, the wireless I/O interface 620, the wired I/O interface 630, the storage device 660, and the network interface 670 are illustrated as communicatively coupled to each other via the bus 616, thereby providing connectivity between the above-described components. In alternative embodiments, the above-described components may be communicatively coupled in a different manner than illustrated in FIG. 6. For example, one or more of the above-described components may be directly coupled to other components, or may be coupled to each other, via one or more intermediary components (not shown). In another example, one or more of the above-described components may be integrated into the processor cores 618 and/or the graphics processor circuitry 612. In some embodiments, all or a portion of the bus 616 may be omitted and the components are coupled directly to each other using suitable wired or wireless connections.

The following examples pertain to further embodiments. Example 1 is an apparatus to facilitate low circuit depth homomorphic encryption evaluations. The apparatus of Example 1 comprises a hardware accelerator to: receive a ciphertext generated by homomorphic encryption (HE) for evaluation; determine two coefficients of the ciphertext for HE evaluation; input the two coefficients as a first operand and a second operand to a pipeline multiplier for low circuit depth HE evaluation; perform combinatorial multiplication between the first operand and portions of the second operand; accumulate results of the combinatorial multiplication at each stage of the pipeline multiplier; and perform reduction with Mersenne prime modulus on a resulting accumulated output of combinatorial multipliers of the pipeline multiplier.

In Example 2, the subject matter of Example 1 can optionally include wherein the pipeline multiplier comprises a plurality of stages, and wherein a number of the plurality of stages is based on an input size of the first operand and the second operand. In Example 3, the subject matter of any one of Examples 1-2 can optionally include wherein the Mersenne prime modulus is at least one a Mersenne prime structure or a generalized Mersenne prime structure. In Example 4, the subject matter of any one of Examples 1-3 can optionally include wherein the pipeline multiplier comprises additional stages to accommodate performing the reduction with Mersenne prime modulus that is the generalized Mersenne prime structure.

In Example 5, the subject matter of any one of Examples 1-4 can optionally include wherein the portions of the second operand differ with each stage of the pipeline multiplier, and wherein the portions of the second operand are inputted from least significant bits to most significant bits to stages of the pipeline multiplier. In Example 6, the subject matter of any one of Examples 1-5 can optionally include wherein the hardware accelerator further comprises a set of combinatorial multiplier circuits, adder circuits, pipeline registers, and a reduction adder circuit.

In Example 7, the subject matter of any one of Examples 1-6 can optionally include wherein the HE evaluation is provided for a low circuit depth application. In Example 8, the subject matter of any one of Examples 1-7 can optionally include wherein the hardware accelerator to accumulate results of the combinatorial multiplication further comprises accumulating aligned results of a current combinatorial multiplier in the pipeline multiplier with a result of an immediately-previous datapath in the pipeline multiplier.

In Example 9, the subject matter of any one of Examples 1-8 can optionally include wherein combinatorial multiplication by the pipeline multiplier is performed in a pipeline manner so that in every clock cycle of the pipeline multiplier there are two different operands that are input into the pipeline multiplier.

Example 10 is a method for facilitating low circuit depth homomorphic encryption evaluations. The method of Example 10 can optional include receiving, by a hardware accelerator of a computing device, a ciphertext generated by homomorphic encryption (HE) for evaluation; determining two coefficients of the ciphertext for HE evaluation; inputting the two coefficients as a first operand and a second operand to a pipeline multiplier for low circuit depth HE evaluation; performing, by the hardware accelerator, combinatorial multiplication between the first operand and portions of the second operand; accumulating results of the combinatorial multiplication at each stage of the pipeline multiplier; and performing, by the hardware accelerator, reduction with Mersenne prime modulus on a resulting accumulated output of combinatorial multipliers of the pipeline multiplier.

In Example 11, the subject matter of Example 10 can optionally include wherein the pipeline multiplier comprises a plurality of stages, and wherein a number of the plurality of stages is based on an input size of the first operand and the second operand. In Example 12, the subject matter of any one of Examples 10-11 can optionally include wherein the Mersenne prime modulus is at least one a Mersenne prime structure or a generalized Mersenne prime structure. In Example 13, the subject matter of any one of Examples 10-12 can optionally include wherein the portions of the second operand differ with each stage of the pipeline multiplier, and wherein the portions of the second operand are inputted from least significant bits to most significant bits to stages of the pipeline multiplier.

In Example 14, the subject matter of any one of Examples 10-13 can optionally include wherein the hardware accelerator comprises a set of combinatorial multiplier circuits, adder circuits, pipeline registers, and a reduction adder circuit. In Example 15, the subject matter of any one of Examples 10-14 can optionally include wherein the HE evaluation is provided for a low circuit depth application. In Example 16, the subject matter of any one of Examples 10-15 can optionally include wherein combinatorial multiplication by the pipeline multiplier is performed in a pipeline manner so that in every clock cycle of the pipeline multiplier there are two different operands that are input into the pipeline multiplier.

Example 17 is a system to facilitate low circuit depth homomorphic encryption evaluations. The system of Example 17 comprises a memory; and a hardware accelerator communicably coupled to the memory, the hardware accelerator to implement a pipeline multiplier comprising a set of a set of combinatorial multiplier circuits, adder circuits, pipeline registers, and a reduction adder circuit, the set to: receive a ciphertext generated by homomorphic encryption (HE) for evaluation; determine two coefficients of the ciphertext for HE evaluation; input the two coefficients as a first operand and a second operand to a pipeline multiplier for low circuit depth HE evaluation; perform combinatorial multiplication between the first operand and portions of the second operand; accumulate results of the combinatorial multiplication at each stage of the pipeline multiplier; and perform reduction with Mersenne prime modulus on a resulting accumulated output of combinatorial multipliers of the pipeline multiplier.

In Example 18, the subject matter of Example 17 can optionally include wherein the pipeline multiplier comprises a plurality of stages, and wherein a number of the plurality of stages is based on an input size of the first operand and the second operand. In Example 19, the subject matter of any one of Examples 17-18 can optionally include wherein the Mersenne prime modulus is at least one a Mersenne prime structure or a generalized Mersenne prime structure. In Example 20, the subject matter of any one of Examples 17-19 can optionally include wherein the HE evaluation is provided for a low circuit depth application.

Example 21 is a non-transitory computer-readable storage medium for facilitating low circuit depth homomorphic encryption evaluations. The non-transitory computer-readable storage medium of Example 21 comprises executable computer program instructions that, when executed by one or more processors, cause the one or more processors to perform operations comprising: receiving, by a hardware accelerator of a computing device, a ciphertext generated by homomorphic encryption (HE) for evaluation; determining two coefficients of the ciphertext for HE evaluation; inputting the two coefficients as a first operand and a second operand to a pipeline multiplier for low circuit depth HE evaluation; performing, by the hardware accelerator, combinatorial multiplication between the first operand and portions of the second operand; accumulating results of the combinatorial multiplication at each stage of the pipeline multiplier; and performing, by the hardware accelerator, reduction with Mersenne prime modulus on a resulting accumulated output of combinatorial multipliers of the pipeline multiplier.

In Example 22, the subject matter of Example 21 can optionally include wherein the pipeline multiplier comprises a plurality of stages, and wherein a number of the plurality of stages is based on an input size of the first operand and the second operand. In Example 23, the subject matter of any one of Examples 21-22 can optionally include wherein the Mersenne prime modulus is at least one a Mersenne prime structure or a generalized Mersenne prime structure. In Example 24, the subject matter of any one of Examples 21-23 can optionally include wherein the portions of the second operand differ with each stage of the pipeline multiplier, and wherein the portions of the second operand are inputted from least significant bits to most significant bits to stages of the pipeline multiplier.

In Example 25, the subject matter of any one of Examples 21-24 can optionally include wherein the hardware accelerator comprises a set of combinatorial multiplier circuits, adder circuits, pipeline registers, and a reduction adder circuit. In Example 26, the subject matter of any one of Examples 21-25 can optionally include wherein the HE evaluation is provided for a low circuit depth application. In Example 27, the subject matter of any one of Examples 21-26 can optionally include wherein combinatorial multiplication by the pipeline multiplier is performed in a pipeline manner so that in every clock cycle of the pipeline multiplier there are two different operands that are input into the pipeline multiplier.

Example 28 is an apparatus for facilitating low circuit depth homomorphic encryption evaluations, according to implementations of the disclosure. The apparatus of Example 28 can comprise means for receiving, by a hardware accelerator of a computing device, a ciphertext generated by homomorphic encryption (HE) for evaluation; means for determining two coefficients of the ciphertext for HE evaluation; means for inputting the two coefficients as a first operand and a second operand to a pipeline multiplier for low circuit depth HE evaluation; means for performing, by the hardware accelerator, combinatorial multiplication between the first operand and portions of the second operand; means for accumulating results of the combinatorial multiplication at each stage of the pipeline multiplier; and means for performing, by the hardware accelerator, reduction with Mersenne prime modulus on a resulting accumulated output of combinatorial multipliers of the pipeline multiplier.

In Example 29, the subject matter of Example 28 can optionally include the apparatus further configured to perform the method of any one of the Examples 11 to 16.

Example 30 is at least one machine readable medium comprising a plurality of instructions that in response to being executed on a computing device, cause the computing device to carry out a method according to any one of Examples 10-16. Example 31 is an apparatus for facilitating low circuit depth homomorphic encryption evaluations, configured to perform the method of any one of Examples 10-16. Example 32 is an apparatus for facilitating low circuit depth homomorphic encryption evaluations comprising means for performing the method of any one of claims 10 to 16. Specifics in the Examples may be used anywhere in one or more embodiments.

In the description above, for the purposes of explanation, numerous specific details are set forth in order to provide a thorough understanding of the described embodiments. It can be apparent, however, to one skilled in the art that embodiments may be practiced without some of these specific details. In other instances, well-known structures and devices are shown in block diagram form. There may be intermediate structure between illustrated components. The components described or illustrated herein may have additional inputs or outputs that are not illustrated or described.

Various embodiments may include various processes. These processes may be performed by hardware components or may be embodied in computer program or machine-executable instructions, which may be used to cause a general-purpose or special-purpose processor or logic circuits programmed with the instructions to perform the processes. Alternatively, the processes may be performed by a combination of hardware and software.

Portions of various embodiments may be provided as a computer program product, which may include a computer-readable medium having stored thereon computer program instructions, which may be used to program a computer (or other electronic devices) for execution by one or more processors to perform a process according to certain embodiments. The computer-readable medium may include, but is not limited to, magnetic disks, optical disks, read-only memory (ROM), random access memory (RAM), erasable programmable read-only memory (EPROM), electrically-erasable programmable read-only memory (EEPROM), magnetic or optical cards, flash memory, or other type of computer-readable medium suitable for storing electronic instructions. Moreover, embodiments may also be downloaded as a computer program product, wherein the program may be transferred from a remote computer to a requesting computer.

Many of the methods are described in their basic form, but processes can be added to or deleted from any of the methods and information can be added or subtracted from any of the described messages without departing from the basic scope of the present embodiments. It may be apparent to those skilled in the art that many further modifications and adaptations can be made. The particular embodiments are not provided to limit the concept but to illustrate it. The scope of the embodiments is not to be determined by the specific examples provided above but by the claims below.

If it is said that an element "A" is coupled to or with element "B," element A may be directly coupled to element B or be indirectly coupled through, for example, element C. When the specification or claims state that a component, feature, structure, process, or characteristic A "causes" a component, feature, structure, process, or characteristic B, it means that "A" is at least a partial cause of "B" but that there may also be at least one other component, feature, structure, process, or characteristic that assists in causing "B." If the specification indicates that a component, feature, structure, process, or characteristic "may", "might", or "could" be included, that particular component, feature, structure, process, or characteristic is not required to be included. If the specification or claim refers to "a" or "an" element, this does not mean there is one of the described elements.

An embodiment is an implementation or example. Reference in the specification to "an embodiment," "one embodiment," "some embodiments," or "other embodiments" means that a particular feature, structure, or characteristic described in connection with the embodiments is included in at least some embodiments. The various appearances of "an embodiment," "one embodiment," or "some embodiments" are not all referring to the same embodiments. It should be appreciated that in the foregoing description of example embodiments, various features are sometimes grouped together in a single embodiment, figure, or description thereof for the purpose of streamlining the disclosure and aiding in the understanding of one or more of the various novel aspects. This method of disclosure, however, is not to be interpreted as reflecting an intention that the claimed embodiments utilize more features than are expressly recited in each claim. Rather, as the following claims reflect, novel aspects lie in less than all features of a single foregoing disclosed embodiment. Thus, the claims are hereby expressly incorporated into this description, with each claim standing on its own as a separate embodiment.

**Claims**

1. An apparatus comprising:
   a hardware accelerator to:

   receive a ciphertext generated by homomorphic encryption (HE) for evaluation;
   determine two coefficients of the ciphertext for HE evaluation;
   input the two coefficients as a first operand and a second operand to a pipeline multiplier for low circuit depth HE evaluation;
   perform combinatorial multiplication between the first operand and portions of the second operand;
   accumulate results of the combinatorial multiplication at each stage of the pipeline multiplier; and
   perform reduction with Mersenne prime modulus on a resulting accumulated output of combinatorial multipliers of the pipeline multiplier.

2. The apparatus of claim 1, wherein the pipeline multiplier comprises a plurality of stages, and wherein a number of the plurality of stages is based on an input size of the first operand and the second operand.

3. The apparatus of any one of claims 1-2, wherein the Mersenne prime modulus is at least one a Mersenne prime structure or a generalized Mersenne prime structure.

4. The apparatus of any one of claims 1-3, wherein the pipeline multiplier comprises additional stages to accommodate performing the reduction with Mersenne prime modulus that is the generalized Mersenne prime structure.

5. The apparatus of any one of claims 1-4, wherein the portions of the second operand differ with each stage of the pipeline multiplier, and wherein the portions of the second operand are inputted from least significant bits to most significant bits to stages of the pipeline multiplier.

6. The apparatus of any one of claims 1-5, wherein the hardware accelerator further comprises a set of combinatorial multiplier circuits, adder circuits, pipeline registers, and a reduction adder circuit.

7. The apparatus of any one of claims 1-6, wherein the HE evaluation is provided for a low circuit depth application.

8. The apparatus of any one of claims 1-7, wherein the hardware accelerator to accumulate results of the combinatorial multiplication further comprises accumulating aligned results of a current combinatorial multiplier in the pipeline multiplier with a result of an immediately-previous datapath in the pipeline multiplier.

9. The apparatus of any one of claims 1-8, wherein combinatorial multiplication by the pipeline multiplier is performed in a pipeline manner so that in every clock cycle of the pipeline multiplier there are two different operands that are input into the pipeline multiplier.

10. A method comprising:

    receiving, by a hardware accelerator of a computing device, a ciphertext generated by homomorphic encryption (HE) for evaluation;
    determining two coefficients of the ciphertext for HE evaluation;
    inputting the two coefficients as a first operand and a second operand to a pipeline multiplier for low circuit depth HE evaluation;
    performing, by the hardware accelerator, combinatorial multiplication between the first operand and portions of the second operand;
    accumulating results of the combinatorial multiplication at each stage of the pipeline multiplier; and
    performing, by the hardware accelerator, reduction with Mersenne prime modulus on a resulting accumulated output of combinatorial multipliers of the pipeline multiplier.

11. The method of claim 10, wherein the pipeline multiplier comprises a plurality of stages, and wherein a number of the plurality of stages is based on an input size of the first operand and the second operand.

12. The method of any one of claims 10-11, wherein the Mersenne prime modulus is at least one a Mersenne prime structure or a generalized Mersenne prime structure.

**13.** The method of any one of claims 10-12, wherein the portions of the second operand differ with each stage of the pipeline multiplier, and wherein the portions of the second operand are inputted from least significant bits to most significant bits to stages of the pipeline multiplier.

**14.** The method of any one of claims 10-13, wherein the hardware accelerator comprises a set of combinatorial multiplier circuits, adder circuits, pipeline registers, and a reduction adder circuit.

**15.** At least one machine readable medium comprising a plurality of instructions that in response to being executed on a computing device, cause the computing device to carry out a method according to any one of claims 10-14.

Computing Device (e.g., Host Machine)
100

Operating System (OS)
106

Graphics Driver
115

Central Processing Unit (CPU)
112

HE LCD Pipeline Evaluation
Component
120

Graphics Processing Unit (GPU)
116

HE LCD Pipeline Evaluation
Component
130

Hardware Accelerator
114

HE LCD Pipeline Evaluation Component 140

Memory
108

HE LCD Pipeline Evaluation Component 110

Input/Output (I/O) Source(s) (e.g., Camera(s), Robotic Eye(s), Microprocessor(s), Speaker(s), Sensor(s), Display Screen(s), Media Player(s), etc.)
104

*FIG. 1*

Computing Device (e.g., Host Machine)
100

HE LCD Pipeline Evaluation Component 110

Combinatorial Multiplier Components 201

Adder Components 203

Pipeline Register Components 205

Mersenne Prime Reduction Components 207

User Interface 219

Input/Output (I/O) Source(s) 104

Input Components 231

Microphone 241

Camera 242

Output Components 233

Speaker Device 243

Display Device 244

Database(s)
225

Communication
Medium(s) 230

*FIG. 2*

300

Operand a
301

Operand b
302

Datapath 1: Combinatorial Multiplier 1 310

Pipeline Register (results of data path 1) 315

Datapath 2 320

Combinatorial Multiplier 2 322

Adder 2 (add aligned result of multipliers 1 and 2) 324

Pipeline Register (results of data path 2) 325

Datapath 3 330

Combinatorial Multiplier 3 332

Adder 3 (add aligned result of data path 2 and multiplier 3) 334

Pipeline Register (results of data path 3) 335

⋮

Pipeline Register (results of data path N-1) 345

Datapath N 350

Combinatorial Multiplier N 352

Adder N (add aligned result of data path N-1 and multiplier N) 354

Output Register (of a x b result) 355

Adders (carry-propagation) to add/subtract for reduction with Mersenne prime modulus 360

Output Register (of reduced a x b mod q result) 370

*FIG. 3*

400

224-bit operand a
401

224-bit operand b
402

Datapath 1: 224 x 32 combinatorial Multiplier 1 410

32-bit (b31:0)
403

Pipeline Register (results of data path 1) 415

Datapath 2 420

224 x 32 Combinatorial Multiplier 2 422

32-bit (b63:32)
404

Adder 2 (add aligned result of multipliers 1 and 2) 424

Pipeline Register (results of data path 2) 425

Datapath 3 430

224 x 32 Combinatorial Multiplier 3 432

32-bit (b95:64)
405

Adder 3 (add aligned result of data path 2 and multiplier 3) 434

Pipeline Register (results of data path 3) 435

Pipeline Register (results of data path N-1) 445

Datapath 7 450

224 x 32 Combinatorial Multiplier N 452

32-bit (b223:196)
406

Adder N (add aligned result of data path 6 and multiplier 7) 454

Output Register (of 448-bit a x b result) 455

Adders (carry-propagation) to add/subtract for reduction with Mersenne prime modulus 460

Output Register (of reduced 228-bit a x b mod q result) 470

*FIG. 4*

500

Receive a cipher text generated by homomorphic encryption (HE) for evaluation

510

Determine two coefficients from the ciphertext for HE evaluation

520

Input the two coefficients as operands to a pipeline multiplier for low circuit depth HE evaluation

530

Perform combinatorial multiplication between the first operand and portions of the second operand that differ with each stage of the pipeline multiplier

540

Accumulate results of the combinatorial multipliers at each stage of the pipeline multiplier

550

Perform reduction with Mersenne prime modulus on resulting accumulated output of the combinatorial multipliers of the pipeline multiplier

560

## FIG. 5

Computing Device 600

Processors 610

Cores 618

HLPEC
615

Cache
662

GPU 612

Memory 640

ROM 642

BIOS 644

RAM 646

Instructions
614

Storage
Device
660

Bus 616

HW Accelerator
668

HE LCD Pipeline
Evaluation
Component 682

Wireless I/O
Interface 620

Wired I/O
Interface 630

Network
Interface 670

Power Mgt 650

Energy Storage
652

Physical Output
Devices 622

Physical Input
Devices 624

Network 672

Power Source
654

FIG. 6

**EUROPEAN SEARCH REPORT**

Europäisches
Patentamt
European
Patent Office
Office européen
des brevets

Application Number

EP 21 18 9323

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KIM SUNWOONG ET AL: "FPGA-based Accelerators of Fully Pipelined Modular Multipliers for Homomorphic Encryption", 2019 INTERNATIONAL CONFERENCE ON RECONFIGURABLE COMPUTING AND FPGAS (RECONFIG), IEEE, 9 December 2019 (2019-12-09), pages 1-8, XP033716309, DOI: 10.1109/RECONFIG48160.2019.8994793 [retrieved on 2020-02-11] * page 1 - page 7 * | 1-15 | INV. H04L9/00 G06F7/00 |
| A | OZTURK ERDINC ET AL: "A Custom Accelerator for Homomorphic Encryption Applications", IEEE TRANSACTIONS ON COMPUTERS, IEEE, USA, vol. 66, no. 1, 1 January 2017 (2017-01-01), pages 3-16, XP011636140, ISSN: 0018-9340, DOI: 10.1109/TC.2016.2574340 [retrieved on 2016-12-09] * page 4 - page 14 * | 1-15 | |
| A | ABOZAID GHADA ET AL: "A Scalable Multiplier for Arbitrary Large Numbers Supporting Homomorphic Encryption", 2013 EUROMICRO CONFERENCE ON DIGITAL SYSTEM DESIGN, IEEE, 4 September 2013 (2013-09-04), pages 969-975, XP032503010, DOI: 10.1109/DSD.2013.110 [retrieved on 2013-10-10] * page 969 - page 973 * | 1-15 | TECHNICAL FIELDS SEARCHED (IPC) H04L G06F |
| | -/-- | | |

The present search report has been drawn up for all claims

| Place of search | Date of completion of the search | Examiner |
|---|---|---|
| Munich | 17 January 2022 | Apostolescu, Radu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 21 18 9323

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SINHA ROY SUJOY ET AL: "FPGA-Based High-Performance Parallel Architecture for Homomorphic Computing on Encrypted Data", 2019 IEEE INTERNATIONAL SYMPOSIUM ON HIGH PERFORMANCE COMPUTER ARCHITECTURE (HPCA), IEEE, 16 February 2019 (2019-02-16), pages 387-398, XP033532521, DOI: 10.1109/HPCA.2019.00052 [retrieved on 2019-03-26] * page 388 - page 395 * | 1-15 | |
| A | US 2014/177828 A1 (LOFTUS JACOB J [GB] ET AL) 26 June 2014 (2014-06-26) * paragraph [0024] * * paragraph [0037] - paragraph [0040] * | 1-15 | |

TECHNICAL FIELDS
SEARCHED     (IPC)

The present search report has been drawn up for all claims

| Place of search | Date of completion of the search | Examiner |
|---|---|---|
| Munich | 17 January 2022 | Apostolescu, Radu |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 18 9323

17-01-2022

| Patent document cited in search report | | Publication date | Patent family member(s) | | Publication date |
|---|---|---|---|---|---|
| US 2014177828 | A1 | 26-06-2014 | CN 105122721 | A | 02-12-2015 |
| | | | EP 2936731 | A2 | 28-10-2015 |
| | | | ES 2598298 | T3 | 26-01-2017 |
| | | | US 2014177828 | A1 | 26-06-2014 |
| | | | US 2016191233 | A1 | 30-06-2016 |
| | | | WO 2014100788 | A2 | 26-06-2014 |

EPO FORM P0459